# EUROPEAN PATENT APPLICATION

(11) **EP 1 758 309 A1**
(43) Date of publication of application: **28.02.2007**
(21) Application number: 05757846.0
(22) Date of filing: 06.07.2005
(51) Int. Cl.: H04L 12/28, G06F 13/00, H04B 7/26

(54) **ACCESS POINT CONTROL SYSTEM AND ACCESS POINT CONTROL METHOD**

(30) Priority: 09.07.2004 JP 2004203783
(71) Applicant: MATSUSHITA ELECTRIC INDUSTRIAL CO., LTD., Osaka 571-8501 (JP)
(72) Inventor: ISHIHARA, Tomohiro, Tsuzuki-ku,Yokohama-shi,Kanagawa 2248539 (JP); IINO, Satoshi, Tsuzuki-ku,Yokohama-shi,Kanagawa 2248539 (JP); MATSUI, Hironori, Tsuzuki-ku,Yokohama-shi,Kanagawa 2248539 (JP)
(74) Representative: Grünecker, Kinkeldey, Stockmair & Schwanhäusser Anwaltssozietät
(86) International application number: PCT/JP2005/012465
(87) International publication number: WO 2006/006464

(57) **Abstract**

An access point control system enables transmission of statistic information on access point devices without communicating extra messages, that is, spending CPU recourses and network band resources unnecessarily. In the system, when the access point devices (101-1 to 101-3) send a session maintenance message to an access point control device (102), the devices report the statistic information to the access point control device (102) at the same time. On receiving the statistic information, the access point control device (102) holds it. On receiving from a network control device (103) a statistic information acquisition request for the statistic information on an access point device, the access point control device (102) reports the statistic information received from the access point device to the network management device (103).

## Description

### Technical Field

The present invention relates to an access point control system and access point control method for controlling access point apparatuses by sending messages to the access point apparatuses.

### Background Art

Recently, network systems are proposed that centrally manage access point apparatuses such as wireless LANs by a single access point control apparatus, rather than managing access point apparatuses separately. In these network systems, rather than providing a managing entity that controls individual access point apparatuses separately, an access point control apparatus is configured so that the access point control apparatus automatically controls the access point apparatuses.

These network systems provide an advantage of using simple and cheap access point apparatuses and thus reducing the management load of the network managing entity. Light Weight Access Point Protocol (LWAPP) is used for communication between an access point control apparatus and access point apparatuses.

In LWAPP, an access point control apparatus maintains a session by constantly checking whether the access point is active. Keep alive processing is implemented by receiving a keep alive message (Echo Request message) sent from an access point apparatus on a regular basis at an access point control apparatus

An externally installed network management apparatus mainly collects statistics information (including counter information) of access point apparatuses. In the LWAPP framework, when an access point control apparatus receives a message from the network management apparatus requesting statistics information of an access point apparatus, the access point control apparatus extracts statistics information of the corresponding access point from statistics information of all managed access points. An access point apparatus sends a statistics information reporting message (Statistics Report) padded with its managed statistics information to the access point control apparatus.

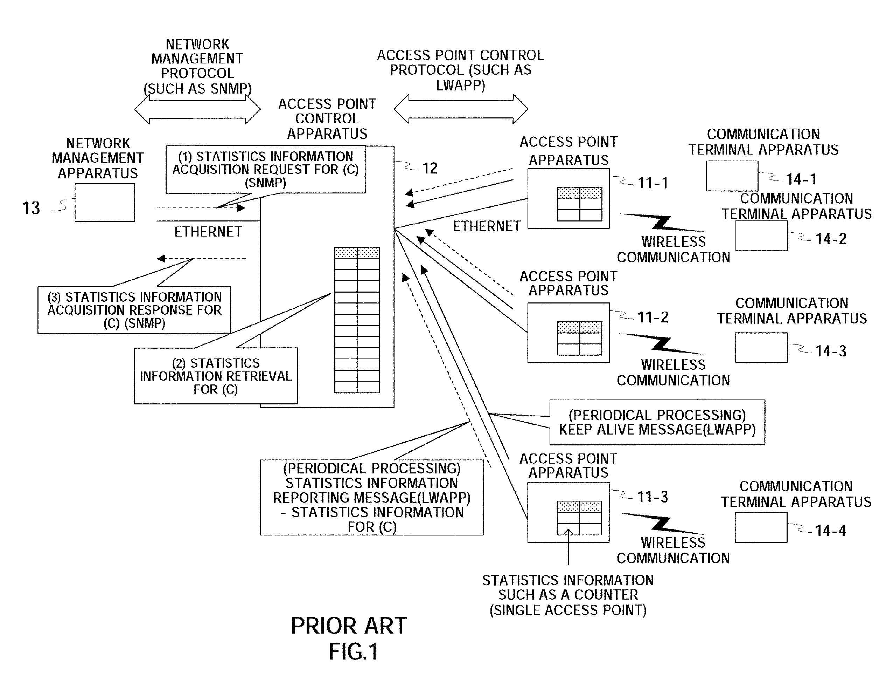

An example of the conventional access point control system is shown in FIG. 1 (See non-patent document 1). With reference to FIG. 1, the solid line arrows indicate keep alive messages exchanged between the access point control apparatus and an access point apparatus; dotted line arrows indicate statistics information reporting messages from access point apparatuses. With reference to FIG. 1, the conventional access point control system comprises: a plurality of access point apparatuses 11-1 to 11-3; access point control apparatus 12 that controls a plurality of access point apparatuses 11-1 to 11-3 by sending messages to the plurality of access point apparatuses 11-1 to 11-3; and network management apparatus 13 that manages access point control apparatus 12 by sending messages to the access point control apparatuses 12.

Access point apparatus 11-1 can communicate with communication terminal apparatuses 14-1 and 14-2. Access point apparatus 11-2 can communicate with communication terminal apparatus 14-3. Access point apparatus 11-3 can communicate with communication terminal apparatus 14-4. Keep alive sequence and statistics information acquisition sequence run between access point control apparatus 12 and each of access point apparatuses 11-1, 11-2, and 11-3.

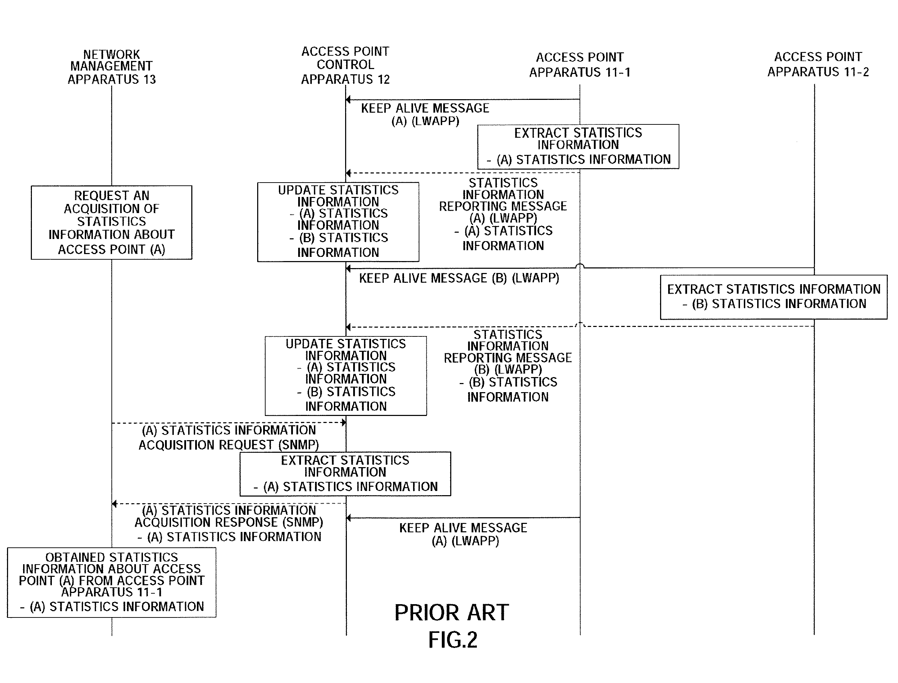

With reference to FIG. 2, access point apparatuses 11-1 and 11-2 send a keep alive message regularly to access point control apparatus 12. With reference to FIG.2, access point apparatuses 11-1 and 11-2 send a statistics information sending message regularly to access point control apparatus 12.

When access point control apparatus 12 receives a statistics information acquisition request from the network management apparatus requesting an acquisition of (a) statistics information from access point apparatus 11-1, access point control apparatus 12 sends statistics information of access point apparatus 11-1 managed by access point control apparatus 12, to network management apparatus 13.
Non-patent Document 1: Internet-draft "Light Weight Access Point Protocol (LWAPP)" at: http://www.ietf.org/internet-drafts/draft-ohara-capw ap-LWAPP-00.txt

### Disclosure of Invention

### Problems to be Solved by the Invention

However, with the conventional access point control system there is a problem that, to allow a network management apparatus acquires statistics information of an access pint apparatus, messages sending statistics information need to be exchanged between the access point apparatus and the access point control apparatus, and, consequently, network bandwidth resources between the access point control apparatus and the access point apparatus and CPU resources of the access point apparatus and the access point control apparatus need are consumed.

It is an obj ect of the present invention to provide an access point control system and access point control method for sending statistics information of access point apparatuses without redundant message exchanges--that is, without consuming superfluous CPU resources and network bandwidth resources.

### Means for Solving the Problem

An access point control system according to the present invention employs a configuration having: a plurality of access point apparatuses; an access point control apparatus that controls the plurality of access point apparatuses by sending messages to the plurality of access point apparatuses; and a network management apparatus that manages the access point control apparatus by sending messages to the access point control apparatus, and, in this access point control system, the plurality of access point apparatuses each has a statistics information simultaneous reporting section that sends a keep alive message to the access point control apparatus and at the same time reports statistics information to the access point control apparatus; and the access point control apparatus has: a statistics information storage section that receives and stores the statistics information; and a statistics information reporting section that, when a statistics information acquisition request requesting an acquisition of the statistics information from the access point apparatuses is received from the network management apparatus, reports the statistics information received from the access point apparatuses to the network management apparatus.

In an access point control system having: a plurality of access point apparatuses; an access point control apparatus that controls the plurality of access point apparatuses by sending messages to the plurality of access point apparatuses; and a network management apparatus that manages the access point control apparatus by sending messages to the access point control apparatus, an access point control method according to the present invention has the steps of: at each of the plurality of access point apparatuses, sending a keep alive message to the access point control apparatus and at the same time reporting statistics information to the access point control apparatus; at the access point control apparatus, receiving and storing the statistics information; and at the access point control apparatus, when a statistics information acquisition request requesting an acquisition of the statistics information from the access point apparatuses is received from the network management apparatus, reporting the statistics information received from the access point apparatuses to the network management apparatus.

### Advantageous Effect of the Invention

According to the present invention, with keep alive messages that are necessary to maintain a system comprised of an access point control apparatus and access point apparatuses, an access point apparatus sends statistics information to the access point control apparatus, so that statistics information of the access point apparatus can be sent without redundant message exchanges--that is, without consuming superfluous CPU resources and network bandwidth resources.

### Brief Description of Drawings

FIG. 1 shows a configuration of a conventional access point control system;
FIG. 2 is a sequence diagram showing an operation of the conventional access point control system;
FIG. 3 shows a configuration of an access point control system in accordance with an embodiment of the present invention;
FIG. 4 is a sequence diagram showing statistics information acquisition processing of an access point control system in accordance with an embodiment of the present invention;
FIG. 5 shows a frame format of a keep alive message for use in an access point control system in accordance with an embodiment of the present invention;
FIG. 6 shows a detailed configuration of an access point control apparatus in the access point control system in accordance with an embodiment of the present invention;
FIG. 7 shows an access point statistics information table for the access point control apparatus in the access point control system in accordance with an embodiment of the present invention;
FIG. 8 shows a detailed configuration of an access point apparatus in the access point control system in accordance with an embodiment of the present invention;
FIG. 9 shows a statistics information table for a single access point, in an access point apparatus in the access point control system in accordance with an embodiment of the present invention;
FIG. 10A is a flowchart for the process of sending a keep alive message by an access point apparatus in the access point control system in accordance with an embodiment of the present invention;
FIG. 10B shows a packet created by an access point apparatus in the access point control system in accordance with an embodiment of the present invention;
FIG. 11A is a flowchart for the process of receiving a keep alive message by an access point control apparatus in the access point control system in accordance with an embodiment of the present invention; and
FIG. 11B shows a packet received by an access point control apparatus in the access point control system in accordance with an embodiment of the present invention.

### Best Mode for Carrying Out the Invention

Now, an embodiment of the present invention will be described in detail with reference to the drawings.

### (Embodiment)

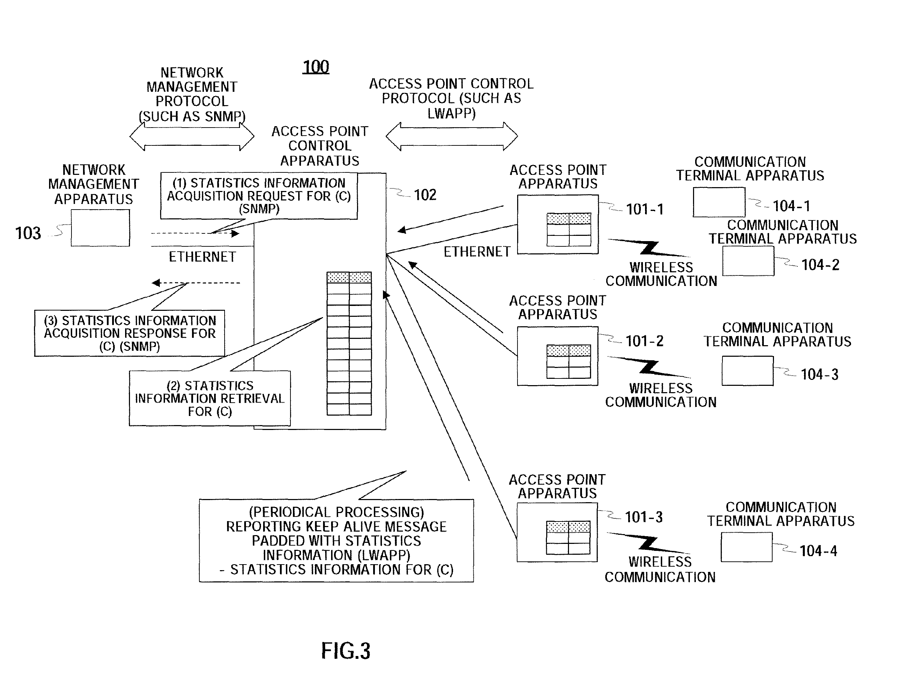

FIG.3 shows a configuration of an access point control system in accordance with an embodiment of the present invention. With reference to FIG.3, the solid arrows indicate keep alive messages sent from access point apparatuses to the access point control apparatus. With reference to FIG.3, access point control system 100 in accordance with an embodiment of the present invention has: a plurality of access point apparatuses 101-1 to 101-3; access point control apparatus 102 that controls a plurality of access point apparatuses 101-1 to 101-3 by sending messages to a plurality of access point apparatuses 101-1 to 101-3; and network management apparatus 103 that manages access point control apparatus 102 by sending messages to access point control apparatuses 102.

Access point apparatus 101-1 can communicate with communication terminal apparatuses 104-1 and 104-2. Access point apparatus 101-2 can communicate with communication terminal apparatus 104-3. Access point apparatus 101-3 can communicate with communication terminal apparatus 104-4.

Each of the plurality of access point apparatuses 101-1 to 101-3 sends a keep alive message to access point control apparatus 102 and at the same time reports statistics information to access point control apparatus 102. Access point control apparatus 102 stores statistics information received from access point apparatuses 101-1 to 101-3. In response to a statistics information acquisition request received from network management apparatus 103 requesting an acquisition of statistics information from access point apparatuses 101-1 to 101-3, access point control apparatus 102 reports statistics information of access point apparatuses 101-1 to 101-3 to network management apparatus 103.

More specifically, access point control apparatus 102 centrally (collectively) manages the statistics information of counters and so on, of all of access point apparatuses 101-1 to 101-3. In other words, access point control apparatus 102 collectively manages access point information.

Each of access point apparatuses 101-1 to 101-3 regularly superimposes statistics information of the counter and so on of the access point on the keep alive message and reports the information to access point control apparatus.

When a statistics information acquisition request is received from network management apparatus 103, access point control apparatus 102 picks up the corresponding statistics information from the statistics information table for all of access point apparatuses 101-1 to 101-3 managed by access point control apparatus, and reports the information to network management apparatus 103. As described above, each of access point apparatuses 101-1, 101-2 and 101-3 can report statistics information to access point control apparatus 102 by sending the keep alive message alone, thus assuring an efficient use of bandwidth.

With reference to FIG's. 3, 4 and 5, an exemplary operation of access point control system 100 in accordance with an embodiment of the present invention will be described in detail.

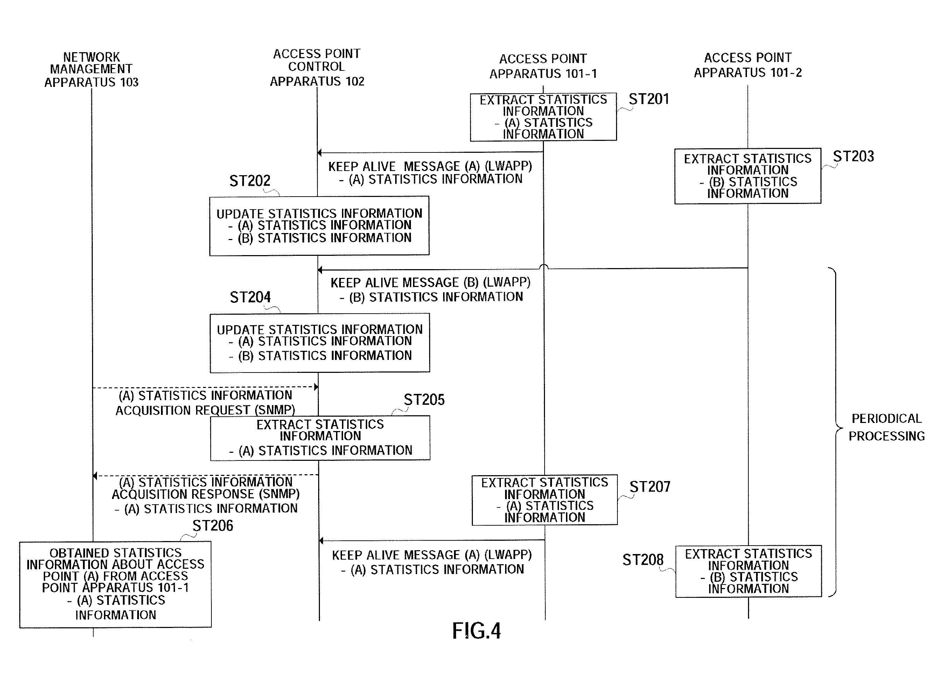

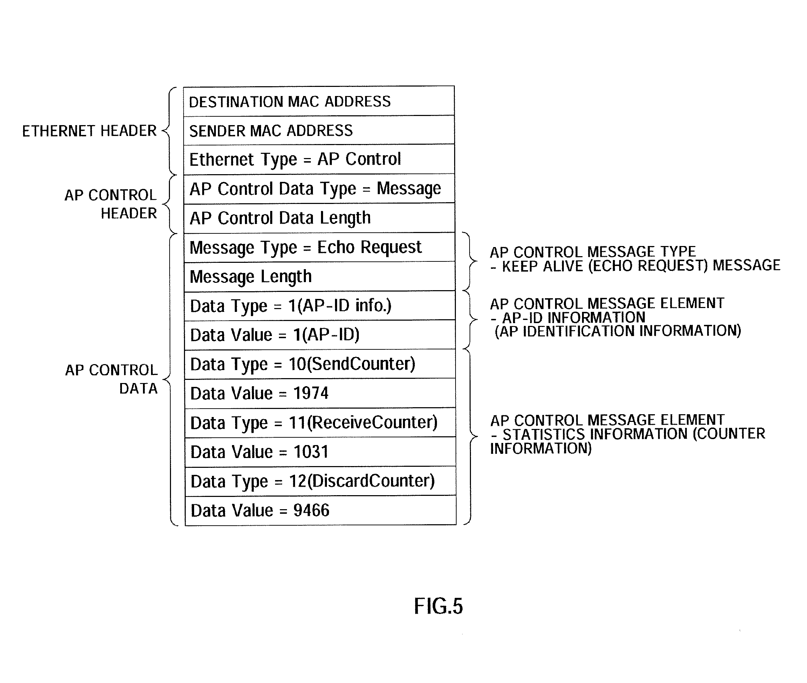

FIG.4 is a sequence diagram showing statistics information acquisition processing by access point control system 100 in accordance with an embodiment of the present invention. FIG.5 shows a frame format of a keep alive message for use in access point control system 100 in accordance with an embodiment of the present invention.

With reference to FIG.4, in step ST201, access point apparatuses 101-1 extracts (a) statistics information, superimposes the information upon the keep alive message, and reports the information to access point control apparatus 102.

Next, in step ST202, access point control apparatus 102 updates the stored statistics information. In step ST203, access point apparatuses 101-2 extracts (b) statistics information, superimposes the information upon the keep alive message, and reports the information to access point control apparatus 102. Next, in step ST204, access point control apparatus 102 updates the stored statistics information.

Next, network management apparatus 103 sends a statistics information acquisition request to access point control apparatuses 102 for an acquisition of (a) statistics information. Next, in step ST205, access point control apparatuses 102 extracts (a) statistics information, superimposes the information upon a statistic information acquisition response, and reports the information to network management apparatus 103. Next, in step ST206, network management apparatus 103 acquires (a) statistics information of access point apparatuses 101-1.

Next, in step ST207, access point apparatuses 101-1 extracts (a) statistics information, superimposes the information upon the keep alive message, and reports the information to access point control apparatus 102. Next, in step ST208, access point apparatus 101-2 extracts (b) statistics information.

With reference to FIG. 5, a keep alive message for use in access point control system 100 in accordance with an embodiment of the present invention includes an Ethernet (registered trademark) header, an AP control header, and AP control data. Note that the keep alive message is by no means limited to lower protocol Ethernet and may be formed by IP, TCP or MPLS.

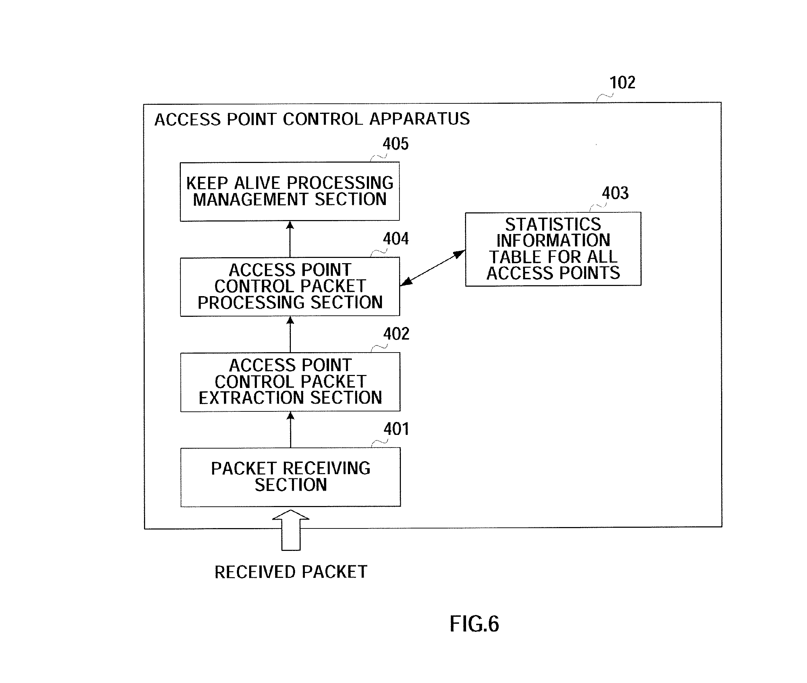

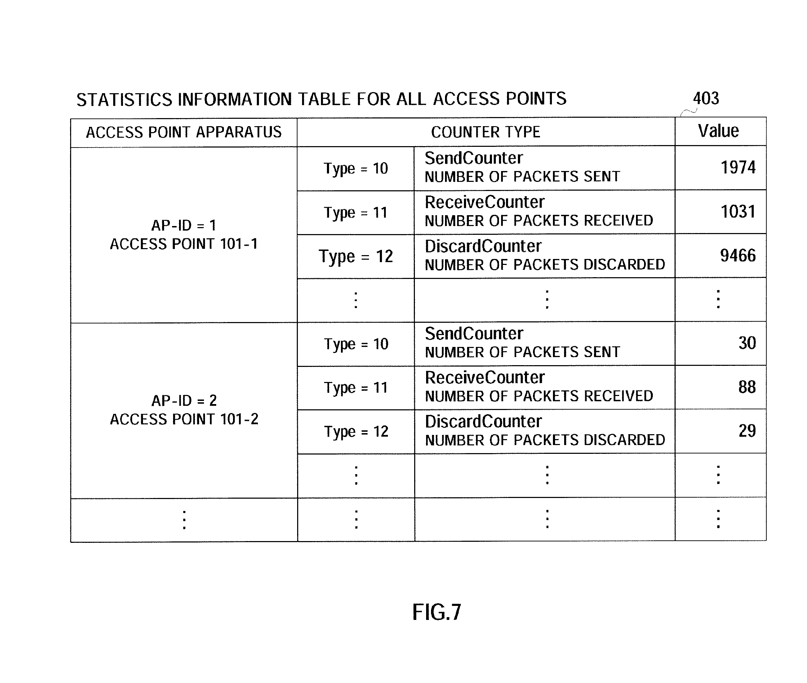

Next, access point control apparatus 102 in access point control system 100 in accordance with an embodiment of the present invention will be described in detail. FIG. 6 is a block diagram showing a detailed configuration of access point control apparatus 102 in access point control system 100 in accordance with an embodiment of the present invention. FIG.7 shows a statistics information table for al access points, in the access point control apparatus in access point control system 100 in accordance with an embodiment of the present invention.

With reference to FIG.6, access point control apparatus 102 includes packet receiving section 401, access point control packet extraction section 402, statistics information table for all access points 403, access point control packet processing section 404, and keep alive processing management section 405.

Packet receiving section 401 receives a packet through a communication interface. Access point control packet extraction section 402 analyzes the header of the received packet to determine whether the packet is a keep alive message.

Statistics information table for all access points 403 collectively manages the statistics information of all of access point apparatuses 101-1 to 101-3.

Access point control packet processing section 404 analyzes the payload of the keep alive message, extracts the statistics information of the access point apparatus,and holds (updates) the statistics information in statistics information table for all access points 403. Keep alive processing management section 405 maintains the access point management session for each access point apparatus.

With reference to FIG. 7, statistics information table for all access points 403 maintains information of the counter types and values for all access point apparatuses 101-1 to 101-3.

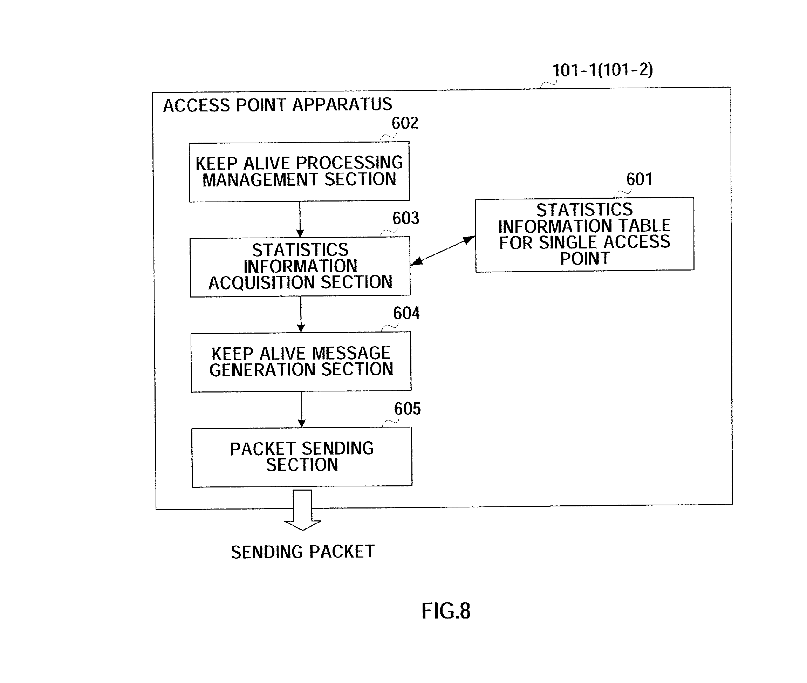

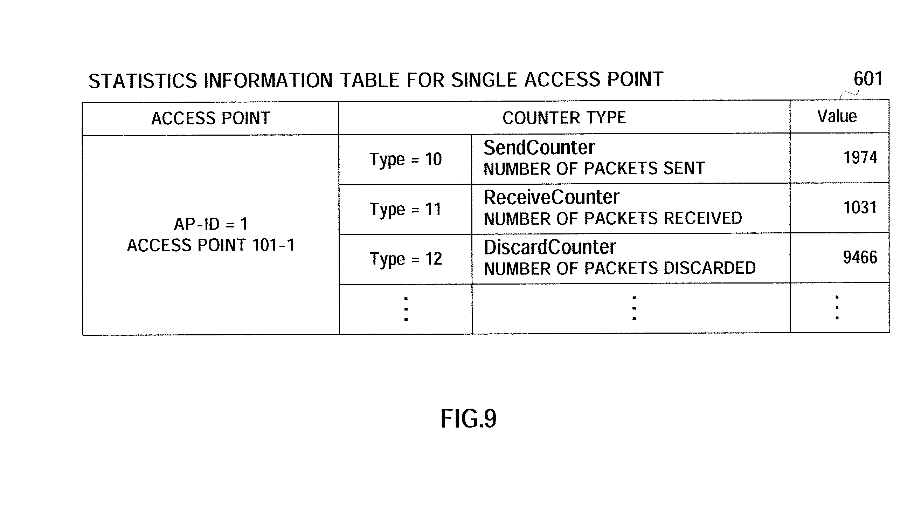

Next, access point apparatus 101-1 in access point control system 100 in accordance with an embodiment of the present invention will be described in detail. FIG. 8 is a block diagram showing a detailed configuration of access point apparatus 101-1 in access point control system 100 in accordance with an embodiment of the present invention. FIG. 9 is a statistics information table for a single access point, for access point apparatus 101-1, in access point control system 100 in accordance with an embodiment of the present invention.

With reference to FIG. 8, access point apparatus 101-1 includes statistics information table for a single access point 601, keep alive processing management section 602, statistics information acquisition section 603, keep alive message generation section 604, and packet sending section 605.

Statistics information table for a single access point 601 manages statistics information for a single access point apparatus. Keep alive processing management section 602 maintains the access point management session for access point control apparatus 102.

Statistics information acquisition section 603 searches statistics information table for a single access point 601 and acquires the statistics information about the access point. Keep alive message generation section 604 creates a keep alive message in which the acquired access point statistics information is embedded. Packet sending section 605 sends the packet to the communication interface.

With reference to FIG. 9, statistics information table for a single access point 601 has information of the counter type and value for a single access point apparatus.

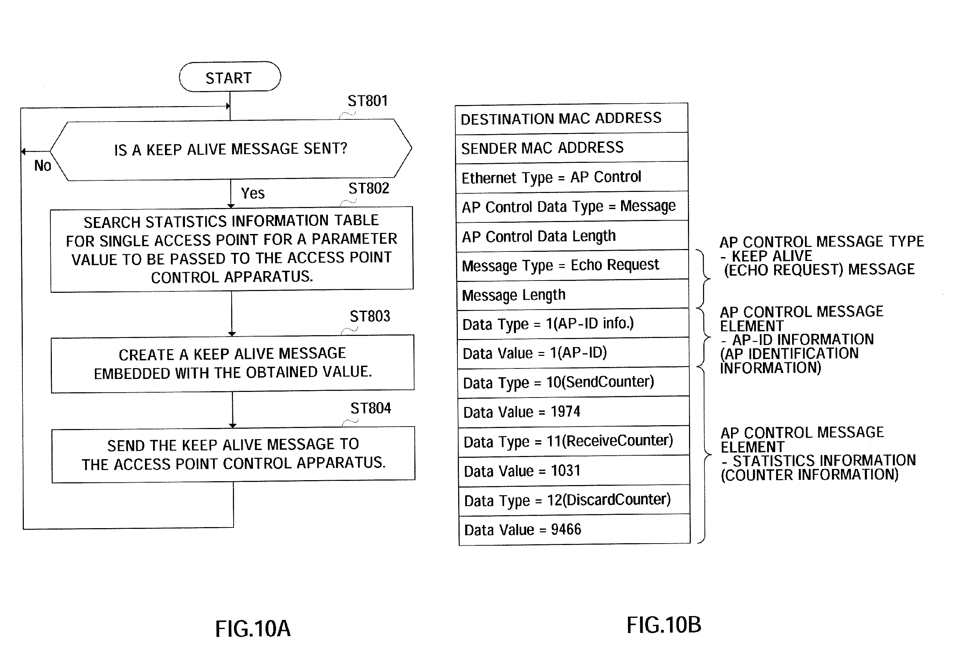

Next, the processing flow of a keep alive message sent by access point apparatus 101-1 in access point control system 100 in accordance with an embodiment of the present invention will be described in detail with reference to the drawings. FIG. 10A is a flowchart of a keep alive message sent by access point apparatus 101-1 in the point control system 100 in accordance with an embodiment of the present invention.

With reference to FIG. 10A, in step ST801, keep alive processing management section 602 determines whether to send a keep alive message. When a keep alive message is sent in step ST801, statistics information acquisition section 603 searches statistics information table for a singe access point 601 for a parameter value to be given to access point control apparatus 102 (step ST802). For example, AP-ID indicates that Data type=1 and Data value=1 (AP-1); statistics information 1 indicates that Data type=10 and Data value=1974; statistics information 2 indicates that Data type=11 and Data value=1031; statistics information 3 indicates that Data type=12 and Data value=9466.

Next, keep alive message generation section 604 creates a keep alive message by embedding the acquired parameter values in the keep alive message (step ST803). Then, packet sending section 605 sends the keep alive message to access point control apparatus 102 (step ST804). FIG. 10B shows an example of a packet created in step ST803.

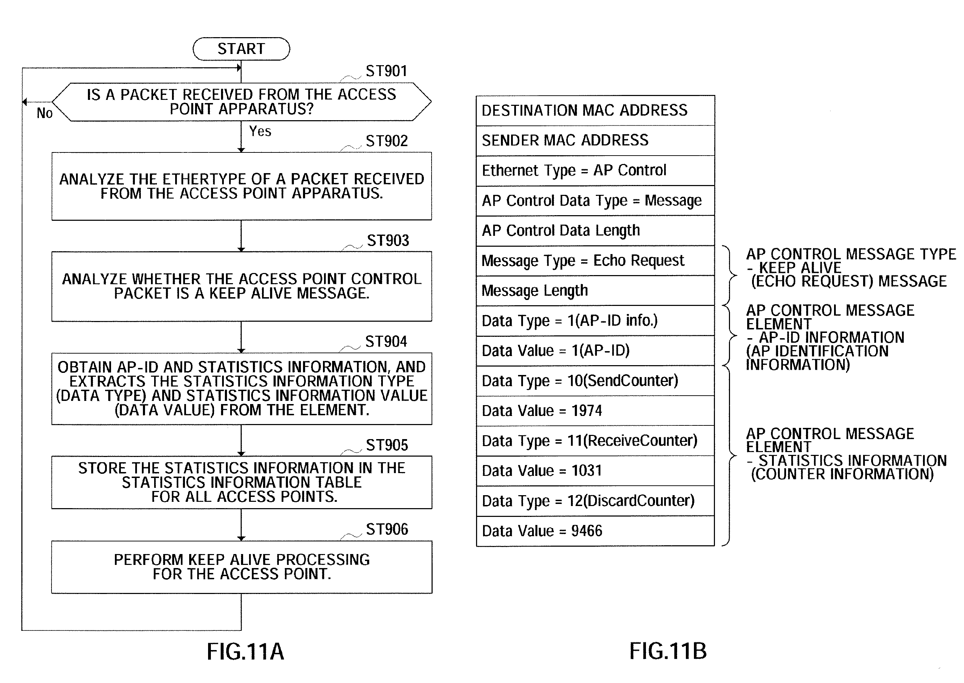

Next, the processing of a keep alive message received by access point control apparatus 102 in access point control system 100 in accordance with an embodiment of the present invention will be described in detail with reference to the drawings. FIG.11A is a flowchart of a keep alive message received by access point control apparatus 102 in access point control system 100 in accordance with an embodiment of the present invention.

With reference to FIG.11A, in step ST901, packet receiving section 401 determines whether to receive a packet from the access point apparatus. When the packet is received from the access point apparatus in step ST901, access point control packet extraction section 402 analyzes the Ethertype of a packet from the access point apparatus (step ST902). For example, when the EtherType is "AP Control," the packet is passed to the access point processing section. Note that the value of EtherType is not limited.

Next, access point control packet processing section 404 analyzes whether the access point control packet is a keep alive message (step ST903). For example, when the AP Control Data Type is "Message, " and the Message Type is "Echo Request," then the packet is determined to be a keep alive message. Access point control packet processing section 404 analyzes the keep alive message and acquire the AP-ID and statistics information, and extracts the statistics information type (Data Type) and statistics information value (Data Value) from the elements (step 904). Note that "Data type=1" is specially defined to indicate an AP-ID. For example, the AP-ID is "Data type=1, Data value=1 (AP-1)"; the statistics information 1 is "Data type=10, Data value=1974"; the statistics information 2 is "Data type=11, Data value=1031; the statistics information 3 is "Data type=12, Data value=9466."

Next, access point control packet processing section 404 stores the statistics information extracted from the element in statistics information table for all access points 403 (step ST905). Keep alive processing management section 405 performs keep alive processing of an access point management session for the access point apparatus (step ST906). FIG. 11B shows an example of a packet created in step ST901.

This application is based on Japanese Patent Application No.2004-203783, filed on July 9, 2004, the entire content of which is expressly incorporated by reference herein.

### Industrial Applicability

The present invention provides an advantage of sending statistics information of access point apparatuses without redundant message exchanges--that is, without consuming superfluous CPU resources and network bandwidth resources--and is therefore suitable for use in an access point control system and access point control method.

## Claims

1. An access point control system comprising:
a plurality of access point apparatuses;
an access point control apparatus that controls the plurality of access point apparatuses by sending messages to the plurality of access point apparatuses; and
a network management apparatus that manages the access point control apparatus by sending messages to the access point control apparatus, wherein:
the plurality of access point apparatuses each comprise a statistics information simultaneous reporting section that sends a keep alive message to the access point control apparatus and at the same time reports statistics information to the access point control apparatus; and
the access point control apparatus comprises:
a statistics information storage section that receives and stores the statistics information; and
a statistics information reporting section that, when a statistics information acquisition request requesting an acquisition of the statistics information from the access point apparatuses is received from the network management apparatus, reports the statistics information received from the access point apparatuses to the network management apparatus.

2. In an access point control system comprising: a plurality of access point apparatuses; an access point control apparatus that controls the plurality of access point apparatuses by sending messages to the plurality of access point apparatuses; and a network management apparatus that manages the access point control apparatus by sending messages to the access point control apparatus, an access point control method comprising the steps of:
at each of the plurality of access point apparatuses, sending a keep alive message to the access point control apparatus and at the same time reporting statistics information to the access point control apparatus;
at the access point control apparatus, receiving and storing the statistics information; and
at the access point control apparatus, when a statistics information acquisition request requesting an acquisition of the statistics information from the access point apparatuses is received from the network management apparatus, reporting the statistics information received from the access point apparatuses to the network management apparatus.
